# EUROPEAN PATENT SPECIFICATION

(11) **EP 2 225 063 B1**
(45) Date of publication and mention of the grant of the patent: **26.09.2012**
(21) Application number: 08853311.2
(22) Date of filing: 28.11.2008
(51) Int. Cl.: B23D 45/02

(54) **CUTTING UNIT FOR A CUTTING -OFF MACHINE**
SCHNEIDEINHEIT FÜR EINE SCHNEIDMASCHINE
UNITÉ DE COUPE POUR MACHINE À TRONÇONNER

(30) Priority: 29.11.2007 IT MO20070368
(43) Date of publication of application: 08.09.2010
(73) Proprietor: Emmegi S.P.A., 41010 Limidi di Soliera (IT)
(72) Inventor: CAIUMI, Andrea, I-41012 Carpi (IT); MATTIOLI, Marco, I-41100 San Damaso (IT)
(74) Representative: Crugnola, Pietro
(86) International application number: PCT/IB2008/003274
(87) International publication number: WO 2009/068982

(56) References cited:
- EP-A- 1 245 319
- DE-A1- 19 500 265
- US-A- 4 574 670
- US-B1- 7 140 361

## Description

The present invention relates to a cutting unit for a cutting-off machine according to the preamble of claim 1, i.e. a machine tool for cutting steel bars, light alloys and aluminium and PVC extrusions, which are widely used in the door, furnishing and construction industries in general. Such a cutting unit is known from EP 1245319 A. Known cutting-off machines may be of the "single-head" or "double-head" type: the "single-head" cutting-off machines are provided with a single cutting unit, just called head, provided with a rotating cutting blade, whilst "double-head" cutting-off machines are provided with two cutting units, or heads, each of which is provided with a respective cutting blade.

A single-head cutting-off machine, to separate a piece of desired length from a bar, or from an extrusion, has to effect two cuts, at the ends of the workpiece to be made, with the same cutting blade. In order to make the two cuts it is thus necessary to move the bar, or the extrusion, or the cutting head.

A double-head cutting-off machine, compared with a single-head cutting-off machine, enables a piece of desired length to be separated from a bar, or from an extrusion, without moving the bar, or the extrusion, or the cutting heads, in half the time and usually with greater precision, owing to the fact that a single grip of the bar or extrusion is possible and that cutting occurs simultaneously at the ends of the piece to be obtained.

The cuts for separating the finished piece from the bar, or extrusion, can be of three types, in function of the orientation of the cutting plane with respect to the resting plane of the bar, or extrusion:
- 90° cut, when the cutting plane is orthogonal to the resting plane of the bar, or extrusion, and orthogonal to the axis of the bar, or extrusion;
- simple tilted cut, when the cutting plane is tilted with respect to the resting plane of the bar, or of the extrusion, by an angle other than 90°, but is perpendicular to a plane that is perpendicular to said resting plane;
- composite tilted cut, when the cutting plane forms a first angle other than 90° with the resting plane of the bar, or extrusion, and a second angle other than 90° with a plane perpendicular to said resting plane.

Both in the single-head cutting-off machines and in the double-head cutting-off machines, each cutting unit, called hereinafter simply head, is provided with a circular steel blade made with diameters and toothings that differ according to the type of material to be cut, the rotation speed of the blade, the advancing speed of the blade with respect to the bar, or extrusion, to be cut and the dimensions of the cross section of the bar, or extrusion, to be cut.

The blade is rotated by a driving shaft that transmits motion to the blade by means of a flange, that clamps and joins together the shaft and the blade. The diameter of the flange is proportionate to the diameter of the blade, because the flange is used to transmit to the blade the torque necessary for cutting the piece; at the same shearing stress, the torque to be transmitted increases with the increase of the blade diameter.

The flange is further used to make rotation of the blade stable and to prevent the blade, rotating at high speed, from oscillating laterally, generating imprecise cuts and even entering into resonance until collapse.

An important parameter in making a cutting-off machine is the so-called cutting capacity of the blade, i.e. the maximum bar or extrusion section that a blade is able to cut.

Cutting capacity depends on the diameter of the blade and on the diameter of the flange that connects the blade to the driving shaft.

In fact, as the diameter of the blade increases the dimensions of the bar, or extrusion section increase that the blade is able to cut, whilst, as the diameter of the flange increases, for the same blade diameter, the dimensions of the bar or extrusion section decrease that the blade is able to cut: in fact, as the diameter of the flange increases, the maximum penetration depth of the blade in the material to be cut decreases.

Normally, a flange of greater diameter corresponds to a blade of greater diameter. Theoretically, a blade with an external diameter D and flange diameter d, has a maximum cutting capacity, in a radial direction, equal to (D-d)/2, i.e. can penetrate the material to be cut to a depth that is not greater than (D-d)/2.

In most embodiments, the blade of the head is rotated by an electric motor. The electric motor can be mounted coaxially to the blade (direct transmission), or mounted on an axis parallel to the blade (indirect transmission, for example via a belt).

The direct transmission is very simple and cheap to make but has the drawback that the motor, which normally has larger dimensions than the diameter of the flange, prevents actually full exploitation of the cutting capacity of a blade, inasmuch, through the effect of the overall dimensions thereof, it decreases the maximum penetration depth of the blade into the material to be cut.

On the other hand, direct transmission enables a pulley to be mounted on the axis of the blade that has a diameter that is the same as or less than the diameter of the flange, without thus penalising the cutting capacity of the blade. Usually, therefore, there is a tendency to devise indirect transmission whenever maximum cutting capacity is required for a determined blade diameter.

A further factor that determines and limits the cutting capacity of a cutting-off machine is the mutual positioning between the bar, or the extrusion, to be cut and the blade. In order to be cut, a bar, or an extrusion, are always placed on a horizontal and a vertical plane, so as to obtain an absolute reference in directions X and Y of the section of the piece to be cut and thus to obtain precise cuts in terms of length and angle.

The height of the axis of the blade with respect to the horizontal reference plane is a characteristic dimension of each cutting-off machine that contributes to determining the real cutting capacity of the cutting-off machine.

The less the height of the axis of the blade with respect to the horizontal resting plane of the bar, or extrusion, the greater will be the cutting capacity of the blade in the direction X, reaching the maximum value when the axis of the blade is at the level of said horizontal resting plane. On the other hand, the cutting capacity of the blade in direction Y increases as the height of the axis of the blade increases with respect to the horizontal resting plane.

The choice of the height of the axis of the blade with respect to the horizontal resting plane of the bar, or extrusion is thus the fruit of a compromise between maximum cutting potential in direction X and maximum cutting potential in direction Y.

There is no position of the axis of the blade that can maximise cutting capacity in both directions X and Y.

Another factor that influences the cutting capacity of the blade are the movements that the blade has to do to perform the cut, in particular the movements required to make tilted cuts.

The movements that the blade performs to make 90° cuts, simple tilted cuts and composite tilted cuts are the following:
- a rotational movement around the blade axis to transmit the cutting power;
- a translational movement in the advancing direction of the cut;
- a rotation movement around a further axis that is orthogonal to the axis of the blade and lying on the plane of the blade that is necessary for simple tilted cuts and
- a rotation movement around a still further axis that is perpendicular to the axis of the blade and to the further axis that is necessary for performing composite tilted cuts. The position of the further axis is particularly important. Normally, said further axis is made to coincide with the horizontal resting plane of the bar or extrusion.

In fact, when rotating around said further axis, in order to perform a tilted cut, the cutting capacity of the blade decreases; further, whatever the angle of tilt of the blade, the latter intersects the horizontal resting plane in a limited zone, owing to the fact that said further axis lies on the horizontal resting plane. If it were not so the blade would intersect the horizontal resting plane at different points as the angle of tilt varies around the further axis, causing cuts that would rapidly destroy the resting plane. As a firm and undamaged resting plane is an indispensable requisite for a cutting-off machine, a result thereof is that it is always necessary to make said further axis coincide with the resting plane.

This constructional constraint is achieved by fixing the height of the axis of the blade with respect to the horizontal resting plane.

Current cutting-off machines all have the limit of the cutting capacity, i.e. they are unable to exploit fully the blade surface that is theoretically available for cutting. Of the various previously mentioned factors (blade diameter - flange diameter - blade movements), it can certainly be said that the first two factors do not substantially create differences between one design solution and another, in the sense that with the same blade diameter and flange diameter, the cutting capacity is in theory always the same.

The third factor, on the other hand, constitutes an element of strong differentiation. In other words, the mechanical system that enables the blade movements to be performed that are necessary to perform the cuts disclosed above may have advantages or on the other hand greatly limit the theoretical cutting capacity of a blade.

The structure that supports the blade of known cutting-off machines makes the further rotation axis through a real axis consisting of two coaxial hinges (or bearings).

These two hinges are housed in the fixed structure of the machine, one in front and one behind the rotation axis of the blade, to form a sufficiently rigid bridge and support. The fixed structure that supports the blade and the hinges thereof is the same structure that acts as a horizontal resting plane. In this manner, the distance between the rotation centre of the blade and the further rotation axis is thus fixed during the design stage and cannot be modified.

Consequently, also the maximum width and the maximum height of the pieces that can be cut by the cutting-off machine is preset and cannot be modified.

Examples of the above mentioned prior art cutting-off machines are disclosed in EP-A-1 245 319, DE 195 00 265 A1, US-B1-7 140 361 and US-A-4 574 670.

The present invention aims to remedy the aforesaid drawbacks.

According to the present invention a cutting unit is provided for a cutting-off machine comprising a base with which there are associated a resting plane for pieces to be cut, a circular blade suitable for cutting said pieces, said blade being supported in an element suitable for rotating around a substantially horizontal axis of tilt, the position of said axis of tilt being independent of the position of said resting plane, said element being cradle-shaped, characterized in that it further comprises an abutting plane fixed to said cradle element (12).

Owing to the invention it is possible to separate the position of said axis of tilt from the resting plane of the piece to be cut, making it possible to adjust the distance of said axis of tilt and the resting plane an the basis of the needs of the cutting to be performed

The invention will be disclosed below merely by way of non- limiting example, with reference to the attached drawings, in which :
Figure 1 is a raised view of a cutting unit of a cutting-off machine according to the invention;
Figure 2 is a left-hand view of the Figure 1;
Figure 3 is a perspective view of a cutting unit according to the invention;
Figure 4 is a further perspective view of a cutting unit according to the invention, that illustrates a first operating condition of the cutting unit, for making a 90° cut;
Figure 5 is a view like the one in Figure 4, that illustrates a second operating condition of the cutting unit, for making a simple tilted cut;
Figure 6 is a view like that of Figures 4 and 5, which shows a third operating condition of the cutting unit, for making a simple tilted cut with a tilt opposite the operating condition in Figure 5;
Figure 7 is a perspective view of a version of the cutting unit according to the invention;
Figure 8 is a further perspective view of the cutting unit in Figure 7, in which some part were removed to highlight the moving mechanism of the resting plane of the piece to be cut;
Figure 9 is a perspective view of a further version of the cutting unit according to the invention suitable for making composite tilted cuts.

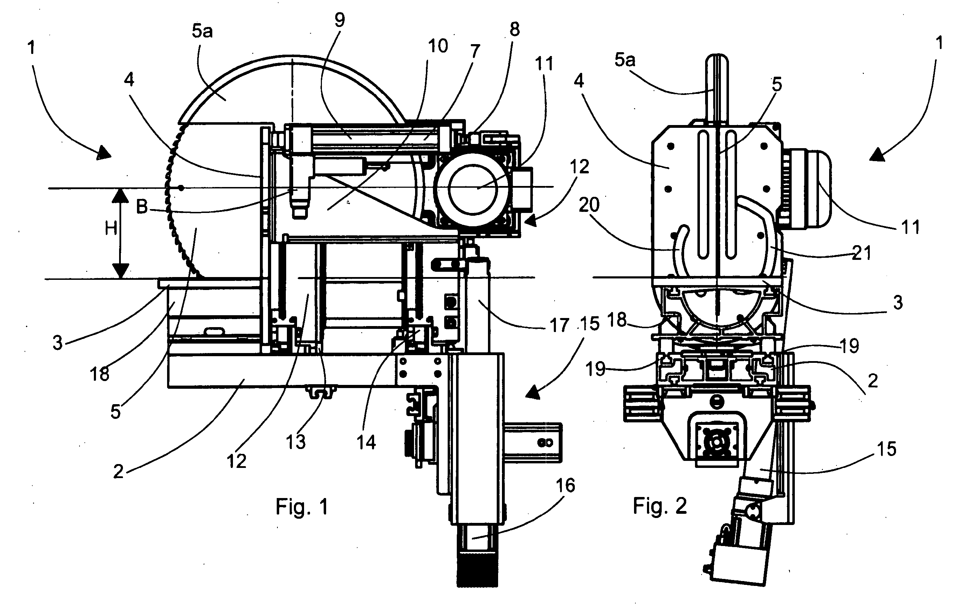

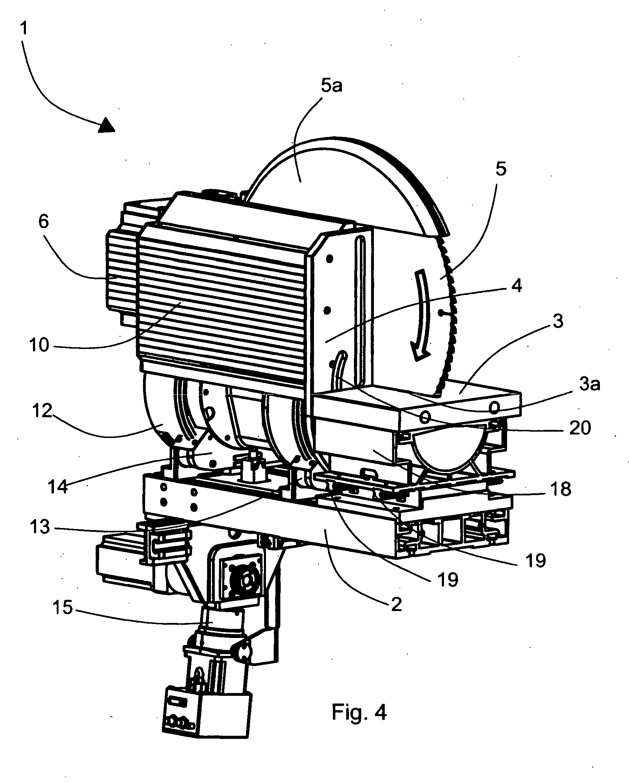

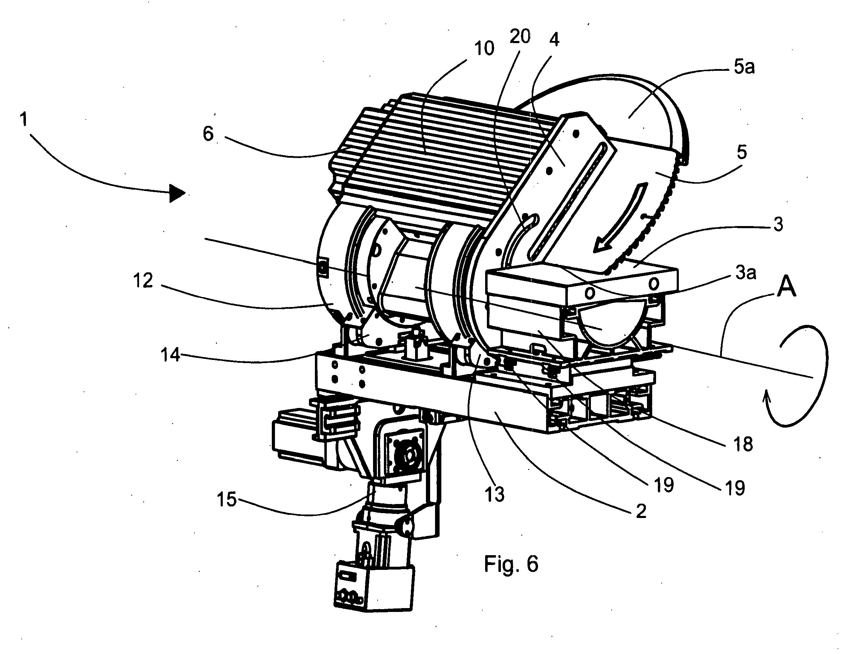

With reference to Figures 1 to 6, a cutting unit 1 according to the invention comprises a base 2 with which are associated a resting plane 3 for the pieces to be cut and an abutting plane 4, that is substantially perpendicular to the resting plane 3 and is intended to provide an abutment for positioning the pieces to be cut.

The cutting unit 1 comprises a circular blade 5, that is provided with a guard 5a and is movable in a direction that is substantially parallel to the resting plane 3 of the piece to be cut.

The resting plane 3 is provided with a first slit 3a through which there can pass the circular blade 5; the abutting plane 4 is provided with a second slit 4a, which is also intended for the passage of the blade 5.

The circular blade 5 is rotationally supported in a slide element 6 driven to slide, in said direction substantially parallel to the first resting plane 3 of the piece to be cut, by a linear actuator, for example an operating cylinder 7, the stem of which 8 is fixed to the slide element 6, whilst the body 9 of the operating cylinder 7 is fixed to a supporting and guiding element 10 with which the slide element 6 is slidingly coupled. The circular blade 5 is driven to rotate by a motor 11, fixed to the slide element 6, by a belt drive, which is also fixed to the slide element 6.

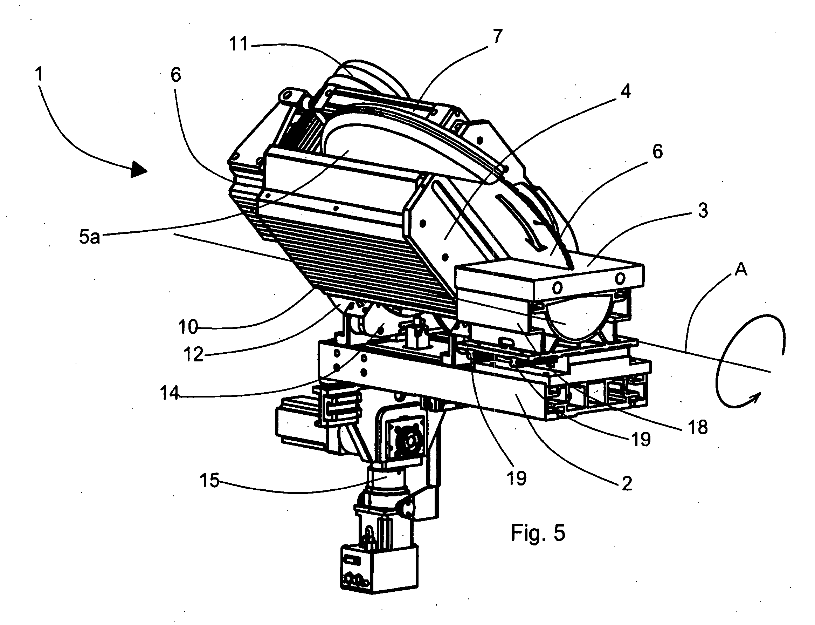

The supporting and guiding element 10 is fixed to a cradle element 12 that can rotate around an axis of tilt A (Figure 5), sliding along an arched pair of guides 13, 14 fixed to the base 2 of the cutting unit 1.

The sliding of the cradle 12 along the guides 13, 14 to perform the rotation around the axis of tilt A, is controlled by a second linear actuator, for example a second operating cylinder 15, the stem 17 of which is articulated to the cradle 12, whilst the body 16 of the operating cylinder is articulated to the base 2 of the cutting unit 1. Unlike known prior-art cutting-off machines, the position of the axis of tilt A around which the cradle 13 rotates is wholly independent of the position of the resting plane 3, which enables the distance H between the resting plane 3 and the rotation axis B of the blade 5 to be chosen at will and to be varied according to cutting needs.

For example, for cutting pieces having a cross section that extends mainly horizontally it is advantageous for the distance H between the rotation axis of the blade 5 and the resting plane 3 of the pieces to be cut to be as small as possible, preferably equal to zero, to maximise the cutting capacity of the blade 5 in horizontal direction, whilst in order to cut pieces the cross section of which extends mainly vertically it is advantageous for the distance H to be as great as possible, to maximise the cutting capacity of the blade 5 in vertical direction.

In order to vary the distance H between the surface of the resting plane 3 and the axis of tilt A, the resting plane 3 is obtained in an interchangeable resting element 18 that is fixable in a removable manner to the base 2 of the cutting unit 1. The distance H between the rotation axis A of the cradle element 13 and the surface of the resting plane 3 is determined by the height of the resting element 18. In order to vary the distance H it is sufficient to replace the resting element 18 with another similar resting element of different height.

The resting element 18 is connected to sliding guides 19 obtained on the base 2, so as to be able to move in a direction parallel to said sliding guides 19. The sliding guides 19 are orthogonal to the axis of tilt A, in a projection of said guides and of said axis on the resting plane 3.

The movement of the resting element 18 along the sliding guides 19 is synchronised with the rotation of the cradle 12. Synchronisation occurs, for example, by a mechanical coupling between the resting element 18 and the abutting plane 4, which is integral with the cradle 12. The mechanical coupling is achieved by coupling between protrusions (not shown) provided on the resting element 18 and a pair of shaped slots 20 and 21 provided on the abutting plane 4. The rotation of the cradle 12 around the axis of tilt A entails a corresponding rotation of the second abutting plane 4 and, therefore, a shift of the slots 20 and 21. The shape of the slots 20, 21 is chosen so that to a rotation of the cradle 12 around the rotation axis A there corresponds a translation of said protrusions in a direction parallel to the sliding guides 19, which determines a translation of the resting element 18 along the sliding guides 19.

The shifting of the resting element 18 synchronised with the rotation of the cradle 12 minimises the dimensions of the slit 3a obtained in the resting plane 3 for the passage of the blade 5 that are necessary to enable the passage of the blade 5 into the slit for any tilt of the blade 5 with respect to the resting plane 3.

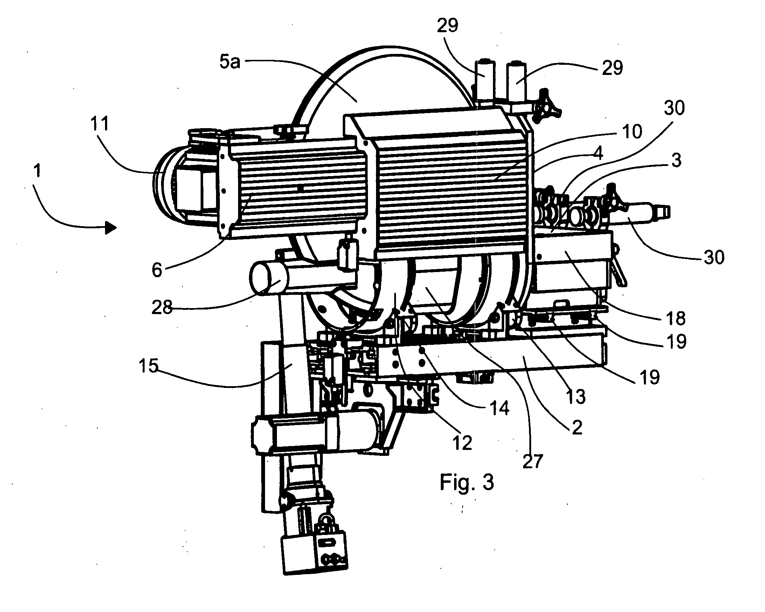

The cutting unit 1 is further provided with an evacuating element 27 (Figure 3), associated with the blade 5 and fixed to the cradle element 12, through which the chips produced during a cutting operation can be evacuated from the cutting zone. The evacuating element 27 is provided with a connecting element 28 suitable for being connected to a sucking device for sucking said chips.

The connecting element 28 extends in a direction that is substantially parallel to the axis of tilt A of the cradle element 12, which makes connecting to the sucking device easy.

The cutting unit 1 further comprises first pressing elements 29 and second pressing elements 30 to lock a piece P to be cut against the resting plane 3 and the abutting plane 4, respectively.

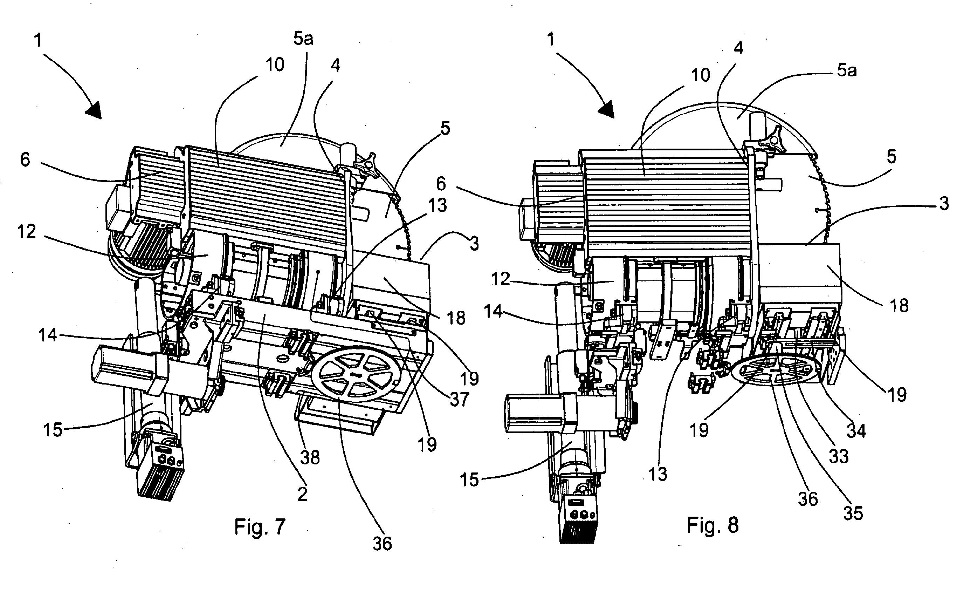

In Figures 7 and 8 there is illustrated a further embodiment of a cutting unit according to the invention in which the resting element 18 is provided below with a pivot 33 an end of which engages in a fork 34 having an end fixed to a hub 35 of a pulley 36 to which respective first ends of two cables 37, 38, are fixed, the respective second ends of which are fixed to the cradle 12. When the cradle 12 is rotated, the cables 37, 38 cause a corresponding rotation of the pulley 36 and of the fork 34. The rotation of the fork 34 causes the pivot 33 to move in a direction parallel to the guides 19 and therefore causes the resting element 18 to move along the guides 19 synchronised with the rotation of the cradle 12.

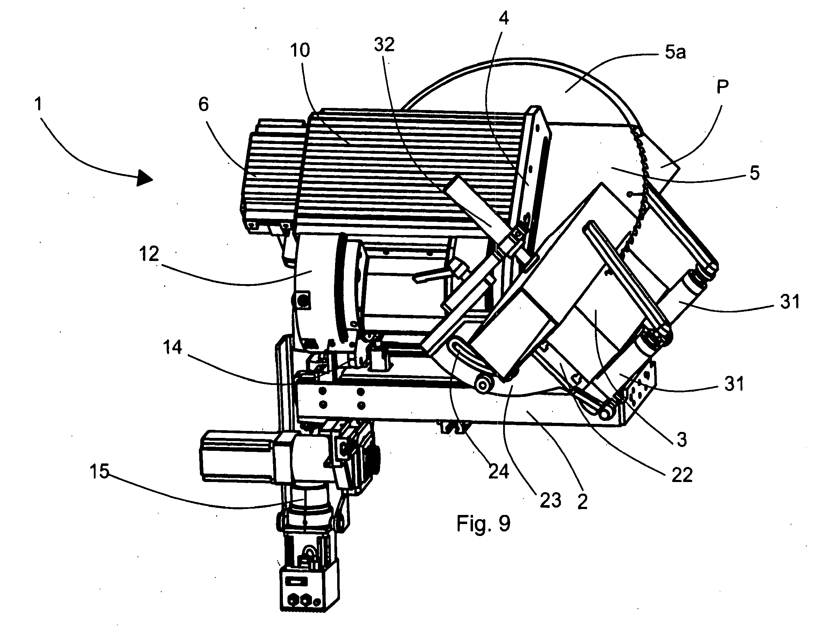

In Figure 9 there is illustrated a second embodiment of a cutting unit according to the invention in which the resting plane 3 is obtained on a movable resting element 22 that is made to as to be able to rotate around an axis substantially parallel to the abutting plane 4. The movable resting element 22 is provided with a pair of lower appendages 23, one of which is visible in Figure 9, each of which is provided with a slot 24 that is suitable for coupling with a corresponding guiding element (which is not shown) associated with the base 2 to enable the movable resting element 22 to rotate. Locking means is also provided to lock the movable element 22 in the angular position desired to perform cutting of a piece.

The movable element 22 makes it possible to make cuts with a composite tilt.

Locking elements 31, 32 are further provided for maintaining the piece P to be cut in position on the resting plane 3 and against the abutting plane 4, respectively.

## Claims

1. Cutting unit (1) for a cutting-off machine comprising a base (2) with which there are associated a resting plane (3) for pieces (P) to be cut, a circular blade (5) suitable for cutting said pieces (P), said blade (5) being supported in an element (12) suitable for rotating around a substantially horizontal axis of tilt (A), the position of said axis of tilt (A) being independent of the position of said resting plane (3), said element (12) being cradle-shaped, **characterized in that** it further comprises an abutting plane (4) fixed to said cradle element (12).

2. Cutting unit (1) according to claim 1, wherein said cradle-shaped element (12) rotates around said axis of tilt (A) sliding along an arched pair of guides (13, 14) fixed to said base (2).

3. Cutting unit (1) according to any preceding claim, wherein said resting plane (3) is obtained in a resting element (18, 22) suitable for being connected in a removable manner to said base (2).

4. Cutting unit (1) according to any preceding claim, wherein said blade (5) is rotatingly supported on a slide element (6) slidingly coupled with a supporting and guiding element (10) fixed to said cradle-shaped element (12).

5. Cutting unit (1) according to claim 4, wherein said blade (5) is driven to rotate by means of a belt drive by a motor (11) fixed to said slide element (6).

6. Cutting unit (1) according to claim 4, or 5, wherein said slide element (6) is driven to slide with respect to said supporting and guiding element (10) by means of a linear actuator (7).

7. Cutting unit (1) according to any one of claims 1 to 6, wherein said cradle-shaped element (12) is driven to rotate around said axis (A) by a linear actuator (15).

8. Cutting unit (1) according to any preceding claims, wherein said abutting plane (4) is provided with slit (4a) for the passage of said blade (5).

9. Cutting unit (1) according to any one of claims 3 to 8, wherein said resting element (18) is connected to sliding guides (19) obtained on the base (2), so as to be able to move in a direction parallel to said sliding guides (19).

10. Cutting unit (1) according to claim 9, wherein said resting element (18) is provided with protrusions that engage a pair of slots (20, 21) provided on said abutting plane (4).

11. Cutting unit (1) according to claim 10, wherein said slots (20, 21) have a shape chosen so that a translation of said resting element (18) along said guides (19) corresponds to a rotation of said cradle element (12) around said axis (A).

12. Cutting unit (1) according to claim 9, wherein said resting element (18) is provided below of a pivot (33), an end of which engages a fork (34) having an end fixed to a hub (35) of a pulley (36) to which respective first ends of two cables (37, 38) are fixed, the respective second ends of which are fixed to said cradle element (12).

13. Cutting unit (1) according to claim 12, wherein a translation of said resting element (18) along said guides (19) corresponds to a rotation of said cradle element (12) around said axis (A).

14. Cutting unit (1) according to any preceding claim, wherein said resting plane (3) is provided with slit (3a) for the passage of said blade (5).

15. Cutting unit (1) according to any one of claims 1 to 8, wherein said resting element (22) is suitable for rotating around an axis substantially parallel to said abutting plane (4).

16. Cutting unit (1) according to claim 15, wherein said resting element (22) is provided with a pair of lower appendages (23), each of which is provided with a slot (24) that is suitable for coupling with a guiding element associated with the base (2).

17. Cutting unit (1) according to claim 15, or 16, further comprising locking means for locking said resting element (22) in a desired angular position with respect to the base (2).

18. Cutting unit (1) according to any preceding claim, further comprising locking elements (29, 30; 31, 32) for locking said piece (P) in a desired position on said resting plane (3).

19. Cutting unit (1) according to any preceding claim, further comprising an evacuating element (27), suitable for evacuating chips produced by said blade (5) during a cutting operation, said evacuating element (27) being fixed to said cradle element (12).

20. Cutting unit (1) according to claim 19, wherein said evacuating element (27) is provided with a connecting element (28) suitable for being connected to a sucking device of said chips, said connecting element (28) extending in a direction substantially parallel to said rotation axis (A).

21. Cutting-off machine **characterised in that** it comprises at least a cutting unit (1) according to any preceding claim.

22. Cutting-off machine according to claim 21, comprising two of said cutting units (1).

## Patentansprüche

1. Schneideinheit (1) für eine Trennmaschine, aufweisend eine Basis (2), mit der eine Ruheebene (3) für zu schneidende Stücke (P) und ein kreisförmiges Blatt (5) verbunden sind, das zum Schneiden der Stücke (P) ausgebildet ist, wobei das Blatt (5) in einem Element (12) gehalten ist, das zur Drehung um eine im Wesentlichen horizontale Kippachse (A) ausgebildet ist, wobei die Lage der Kippachse (A) unabhängig von der Lage der Ruheebene (3) ist, wobei das Element (12) wiegenförmig ist, **dadurch gekennzeichnet, dass** es ferner eine Begrenzungsebene (4) aufweist, die am Wiegenelement (12) festgelegt ist.

2. Schneideinheit (1) nach Anspruch 1, wobei sich das wiegenförmige Element (12) entlang eines gekrümmten Paares von Führungen (13, 14) gleitend, die an der Basis (2) festgelegt sind, um die Kippachse (A) dreht.

3. Schneideinheit (1) nach irgendeinem der vorhergehenden Ansprüche, wobei die Ruheebene (3) in einem Ruheelement (18, 22) vorgesehen ist, das dazu ausgebildet ist, lösbar mit der Basis (2) verbunden zu sein.

4. Schneideinheit (1) nach irgendeinem der vorhergehenden Ansprüche, wobei das Blatt (5) drehbar an einem Gleitelement (6) gehalten ist, das verschiebbar mit einem Halte- und Führungselement (10) gekoppelt ist, das am wiegenförmigen Element (12) festgelegt ist.

5. Schneideinheit (1) nach Anspruch 4, wobei das Blatt (5) durch einen Motor (11), der am Gleitelement (6) festgelegt ist, mittels eines Riemenantriebs in Rotation versetzt wird.

6. Schneideinheit (1) nach Anspruch 4 oder 5, wobei das Gleitelement (6) mittels eines Linearaktuators (7) angetrieben ist, um gegenüber dem Halte- und Führungselement (10) zu gleiten.

7. Schneideinheit (1) nach irgendeinem der Ansprüche 1 bis 6, wobei das wiegenförmige Element (12) durch einen Linearaktuator (15) angetrieben ist, um sich um die Achse (A) zu drehen.

8. Schneideinheit (1) nach irgendeinem der vorhergehenden Ansprüche, wobei die Begrenzungsebene (4) einen Schlitz (4a) für den Durchgang des Blatts (5) aufweist.

9. Schneideinheit (1) nach irgendeinem der Ansprüche 3 bis 8, wobei das Ruheelement (18) mit Gleitführungen (19) verbunden ist, die auf der Basis (2) enthalten sind, um befähigt zu sein, sich in einer Richtung zu bewegen, die parallel zu den Gleitführungen (19) ist.

10. Schneideinheit (1) nach Anspruch 9, wobei das Ruheelement (18) Vorsprünge aufweist, die an ein Paar Schlitze (20, 21) eingreifen, die auf der Begrenzungsebene (4) vorgesehen sind.

11. Schneideinheit (1) nach Anspruch 10, wobei die Schlitze (20, 21) eine Form aufweisen, die derart gewählt ist, dass eine Verschiebung des Ruheelements (18) entlang der Führungen (19) mit einer Drehung des Wiegenelements (12) um die Achse (A) korrespondiert.

12. Schneideinheit (1) nach Anspruch 9, wobei das Ruheelement (18) unterhalb eines Gelenks (33) vorgesehen ist, dessen eines Ende an einer Gabel (34) eingreift, die ein Ende aufweist, das an einer Nabe (35) einer Riemenscheibe (36) festgelegt ist, an der jeweilige erste Enden zweier Kabel (37, 38) festgelegt sind, deren jeweilige zweite Enden am Wiegenelement (12) festgelegt sind.

13. Schneideinheit (1) nach Anspruch 12, wobei eine Verschiebung des Ruheelements (18) entlang der Führungen (19) mit einer Drehung des Wiegenelements (12) um die Achse (A) korrespondiort.

14. Schneideinheit (1) nach irgendeinem der vorhergehenden Ansprüche, wobei die Ruheebene (3) mit einem Schlitz (3a) für den Durchgang des Blattes (5) versehen ist.

15. Schneideinheit (1) nach irgendeinem der Ansprüche 1 bis 8, wobei das Ruheelement (22) dazu ausgebildet ist, sich um eine Achse zu drehen, die im Wesentlichen parallel zur Begrenzungsebene (4) ist.

16. Schneideinheit (1) nach Anspruch 15, wobei das Ruheelement (22) mit einem Paar unterer Anhänge (23) versehen ist, von denen jeder mit einem Schlitz (24) versehen ist, der zur Kopplung mit einem Führungselement ausgebildet ist, das mit der Basis (2) verbunden ist.

17. Schneideinheit (1) nach Anspruch 15 oder 16, ferner aufweisend ein Verriegelungsmittel zur Arretierung des Ruheelements (22) in einer gewünschten Winkellage bezüglich der Basis (2).

18. Schneideinheit (1) nach irgendeinem der vorhergehenden Ansprüche, ferner aufweisend Verriegelungselemente (29, 30; 31, 32) zur Arretierung des Stücks (P) in einer gewünschten Lage auf der Ruheebene (3).

19. Schneideinheit (1) nach irgendeinem der vorhergehenden Ansprüche, ferner aufweisend ein Räumelement (27), das zur Abführung von Spänen ausgebildet ist, die vom Blatt (5) bei einem Schneidvorgang erzeugt werden, wobei das Räumelement (27) am Wiegenelement (12) festgelegt ist.

20. Schneideinheit (1) nach Anspruch 19, wobei das Räumelement (27) mit einem Verbindungselement (28) versehen ist, das dazu ausgebildet ist, mit einer Saugeinrichtung für die Späne verbunden zu sein, wobei sich das Verbindungselement (28) in einer Richtung erstreckt, die im Wesentlichen parallel zur Rotationsachse (A) ist.

21. Trennmaschine, **dadurch gekennzeichnet, dass** sie zumindest eine Schneideinheit (1) nach irgendeinem der vorhergehenden Ansprüche aufweist.

22. Trennmaschine nach Anspruch 21, die zwei der Schneideinheiten (1) aufweist.

## Revendications

1. Unité de coupe (1) pour une machine à tronçonner, comprenant une base (2) à laquelle sont associés un plan d'appui (3) pour des pièces (P) à découper, une lame circulaire (5) apte à découper lesdites pièces (P), ladite lame (5) étant supportée dans un élément (12) apte à tourner autour d'un axe d'inclinaison (A) sensiblement horizontal, la position dudit axe d'inclinaison (A) étant indépendante de la position dudit plan d'appui (3), ledit élément (12) ayant la forme d'un berceau, ***caractérisée en ce qu'***elle comprend en outre un plan (4) de butée fixé audit élément de berceau (12).

2. Unité de coupe (1) selon la revendication 1, dans laquelle ledit élément (12) en forme de berceau tourne autour dudit axe d'inclinaison (A) en glissant le long d'une paire de guides arqués (13, 14) fixés à ladite base (2).

3. Unité de coupe (1) selon l'une quelconque des revendications précédentes, dans laquelle ledit plan d'appui (3) est réalisé dans un élément d'appui (18, 22) apte à être raccordé de manière amovible à ladite base (2).

4. Unité de coupe (1) selon l'une quelconque des revendications précédentes, dans laquelle ladite lame (5) est supportée de manière rotative sur un élément de coulisse (6) couplé de manière coulissante à un élément de support et de guidage (10) fixé audit élément (12) en forme de berceau.

5. Unité de coupe (1) selon la revendication 4, dans laquelle ladite lame (5) est entraînée pour tourner au moyen d'une transmission par courroie d'un moteur (11) fixé audit élément de coulisse (6).

6. Unité de coupe (1) selon la revendication 4 ou 5, dans laquelle ledit élément de coulisse (6) est actionné pour coulisser par rapport audit élément de support et de guidage (10) au moyen d'un vérin linéaire (7).

7. Unité de coupe (1) selon l'une quelconque des revendications 1 à 6, dans laquelle ledit élément (12) en forme de berceau est actionné pour tourner autour dudit axe (A) par un vérin linéaire (15).

8. Unité de coupe (1) selon l'une quelconque des revendications précédentes, dans laquelle ledit plan (4) de butée est pourvu d'une fente (4a) pour le passage de ladite lame (5).

9. Unité de coupe (1) selon l'une quelconque des revendications 3 à 8, dans laquelle ledit élément d'appui (18) est raccordé à des glissières de guidage (19) ménagées sur la base (2), de manière à pouvoir se déplacer dans une direction parallèle auxdites glissières de guidage (19).

10. Unité de coupe (1) selon la revendication 9, dans laquelle ledit élément d'appui (18) est pourvu de saillies qui s'engagent dans une paire de fentes (20, 21) ménagées sur ledit plan de butée (4).

11. Unité de coupe (1) selon la revendication 10, dans laquelle lesdites fentes (20, 21) ont une forme choisie pour qu'une translation dudit élément d'appui (18) le long desdites glissières de guidage (19) corresponde à une rotation dudit élément (12) en berceau autour dudit axe (A).

12. Unité de coupe (1) selon la revendication 9, dans laquelle ledit élément d'appui (18) est ménagé au-dessous d'un pivot (33) dont une extrémité engage une fourche (34) ayant une extrémité fixée à un moyeu (35) d'une poulie (36) à laquelle sont fixées des premières extrémités respectives de deux câbles (37, 38), les deuxièmes extrémités respectives desquelles sont fixées audit élément (12) en berceau.

13. Unité de coupe (1) selon la revendication 12, dans laquelle une translation dudit élément d'appui (18) le long desdits guides (19) correspond à une rotation dudit élément (12) en berceau autour dudit axe (A).

14. Unité de coupe (1) selon l'une quelconque des revendications précédentes, dans laquelle ledit plan d'appui (3) est pourvu d'une fente (3a) pour le passage de ladite lame (5).

15. Unité de coupe (1) selon l'une quelconque des revendications 1 à 8, dans laquelle ledit élément d'appui (22) est apte à tourner autour d'un axe sensiblement parallèle audit plan de butée (4).

16. Unité de coupe (1) selon la revendication 15, dans laquelle ledit élément d'appui (22) est pourvu d'une paire d'appendices inférieurs (23), chacun pourvu d'une fente (24) qui est apte à s'accoupler avec un élément de guidage associé à la base (2).

17. Unité de coupe (1) selon la revendication 15 ou 16, comprenant en outre des moyens de verrouillage pour bloquer ledit élément d'appui (22) dans une position angulaire désirée par rapport à la base (2).

18. Unité de coupe (1) selon l'une quelconque des revendications précédentes, comprenant en outre des éléments de verrouillage (29, 30 ; 31, 32) pour bloquer ladite pièce (P) dans une position désirée sur ledit plan d'appui (3).

19. Unité de coupe (1) selon l'une quelconque des revendications précédentes, comprenant en outre un élément évacuateur (27) apte à évacuer des copeaux produits par ladite lame (5) pendant une opération de coupe, ledit élément évacuateur (27) étant fixé audit élément (12) en berceau.

20. Unité de coupe (1) selon la revendication 19, dans laquelle ledit élément évacuateur (27) est pourvu d'un élément de raccord (28) apte à être raccordé à un dispositif d'aspiration desdits copeaux, ledit élément de raccord (28) s'étendant dans une direction sensiblement parallèle audit axe de rotation (A).

21. Machine à tronçonner ***caractérisée en ce qu'***elle comprend au moins une unité (1) de coupe selon l'une quelconque des revendications précédentes.

22. Machine à tronçonner selon la revendication 21, comprenant deux desdites unités (1) de coupe.
